Europäisches Patentamt

European Patent Office

Office européen des brevets

(19)

(11) Veröffentlichungsnummer: **0 060 382**
**A1**

(12) **EUROPÄISCHE PATENTANMELDUNG**

(21) Anmeldenummer: **82100500.6**

(22) Anmeldetag: **26.01.82**

(51) Int. Cl.³: **B 23 K 9/02**

(30) Priorität: **13.03.81 DE 3109618**

(43) Veröffentlichungstag der Anmeldung: **22.09.82**
Patentblatt 82/38

(84) Benannte Vertragsstaaten: **AT BE CH FR GB IT LI LU NL SE**

(71) Anmelder: **KLÖCKNER-WERKE Aktiengesellschaft, Klöcknerstrasse 29, D-4100 Duisburg 1 (DE)**

(72) Erfinder: **Buissin, Pierre, Adalbert-Stifter-Strasse 15, D-5090 Leverkusen 3 (DE)**

(74) Vertreter: **Kiefer, Winfried, Dipl.-Phys., Klöckner-Werke Aktiengesellschaft Patentabteilung Klöcknerstrasse 29, D-4100 Duisburg 1 (DE)**

(54) **Verfahren und Vorrichtung zum Verschweissen von zwei längs ihrer räumlichen Durchdringungskurve miteinander zu verschweissenden Hohlkörpern.**

(57) Zwei längs ihrer räumlichen Durchdringungskurve zu verschweißende Hohlkörper werden zu einem Werkstück zusammengeheftet. Das Werkstück besteht zum Beispiel aus dem Druckbehälter 1 und dem Rohrstutzen 2. Der Druckbehälter wird in eine Pendeleinrichtung 5 eingespannt. Auf der Stirnseite des Rohrstutzens wird eine rotierende Schweißeinrichtung 10 angeordnet. Pendelbewegung und Rotationsbewegung werden so gesteuert, daß die Durchdringungskurve unterhalb des Schweißkopfes 11 im wesentlichen horizontal verläuft.

EP 0 060 382 A1

-1-

Verfahren und Vorrichtung zum Verschweißen von zwei längs
ihrer räumlichen Durchdringungskurve miteinander zu verschweißenden Hohlkörpern

Die Erfindung betrifft Verfahren zum Verschweißen von längs
ihrer räumlichen Durchdringungskurve miteinander zu verschweißenden Hohlkörpern sowie eine Vorrichtung zur Durchführung dieser Verfahren. Miteinander zu verschweißende Hohlkörper sind z.B. Behälter von hohlzylindrischer Gestalt und
an sich anzuschweißende Rohrstutzen, die im Reaktorbau in
Kernkraftwerken zum Einsatz kommen.

Die Erfindung ist jedoch nicht auf dieses Gebiet beschränkt.
Sie erstreckt sich auf alle Gebiete der Technik, auf denen
Hohlkörper miteinander verschweißt werden.

Der Hohlkörper mit dem kleineren Außendurchmesser ist als
durchdringender Hohlkörper und der Hohlkörper mit dem grösseren Außendurchmesser als der durchdrungene Hohlkörper bezeichnet.

Sowohl der durchdrungene als auch der durchdringende Hohlkörper können eine Zylindersymmetrie bzw. eine Hohlkegelsymmetrie, allgemein eine Rotationssymmetrie aufweisen. Der
eine oder andere von ihnen oder auch beide können einen
elliptischen Umriß haben. Die Umrißlinie des einen oder anderen oder auch von beiden kann auch nach Art eines Polygonzuges verlaufen. Die Hohlkörper können auch von einer Rotationssymmetrie abweichende Gebilde sein.

-2-

Unter Schweißen ist im folgenden das automatische Lichtbogenschweißen, insbesondere das unter Pulver Schweißen(UP-Schweis-sen), sowie auch das Schweißen mit und ohne Schutzgas zu verstehen.

In den häufigsten Fällen werden jedoch hohlzylindrische Hohlkörper miteinander verschweißt. Das erfindungsgemäße Verfahren bezieht sich jedoch ganz allgemein auf die oben definierten Hohlkörper.

Verfahren zum Verschweißen von zylindrischen Hohlkörpern sind bereits bekannt (DBP 11 37 926). Der durchdrungene und auch der durchdringende Hohlkörper sind hierbei ortsfest angeordnet, während der Schweißkopf so geführt wird, daß eine Schweißnaht längs der Durchdringungskurve erzeugt wird. Die Durchdringungskurve ist während des Schweißvorgangs raumfest.

Es zeigte sich jedoch, daß diese Verfahren nur bis zu einem maximalen Verhältnis der Außendurchmesser bis zu 2 : 1 der beiden miteinander zu verschweißenden Hohlkörper möglich ist. Darüberhinaus treten Schwierigkeiten auf: Da die Durchdringungskurve während des Schweißens raumfest ist, weist sie Abschnitte auf, die eine große Steigung zur Lotrechten haben. Dies hat zur Folge, daß beim Abwärtsschweißen flachere und breitere Nähte und beim Aufwärtsschweißen überhöhte und schmälere Schweißnähte erzeugt werden. Darüber hinaus sind Unterspülungen nicht zu vermeiden.

Diese Effekte haben zur Folge, daß auf dem Gebiet des Druckbehälterbaus und des Kernreaktorbaus die hohen Sicherheitsauflagen bezüglich der Schweißnähte bei der Durchführung der üblichen Schweißverfahren nicht mehr eingehalten werden können, falls das Verhältnis der Außendurchmesser das Verhältnis von 2:1 überschreitet.

Der Erfindung liegt die Aufgabe zugrunde, ein Schweißverfahren anzugeben, das an eine obere Grenze dieses Verhältnisses nicht mehr gebunden ist, d.h. bei beliebig großem und auch kleinem Verhältnis dieser Außendurchmesser durchführbar ist.

Diese Aufgabe wird gemäß einem ersten Lösungsprinzip dadurch gelöst, daß beide Hohlkörper unter Bildung eines Werkstücks miteinander verbunden werden, der durchdrungene Hohlkörper des gebildeten Werkstücks in einer Einrichtung zur Durchführung einer Pendelbewegung eingespannt wird, auf der der Durchdringungskurve gegenüberliegenden Stirnfläche des durchdringenden Hohlkörpers eine Schweißeinrichtung lösbar angeordnet wird, die Pendelfrequenz der Einrichtung und die Geschwindigkeit des Schweißkopfes in Richtung der Durchdringungskurve der Schweißeinrichtung so gesteuert werden, daß während des Schweißens die Durchdringungskurve unterhalb des Schweißkopfes im wesentlichen in horizontalen Ebenen durchläuft. Durch diese Maßnahmen wird erreicht, daß das Schweissen nicht längs einer raumfesten Durchdringungskurve durchgeführt wird, sondern vielmehr wird durch die Pendelbewegung des durchdrungenen Werkstückes und durch die Geschwindigkeit des Schweißkopfes längs der Durchdringungskurve die räumliche Lage der Durchdringungskurve so geändert, daß der momentane Abschnitt der Durchdringungskurve unterhalb des Schweißkopfes im wesentlichen horizontal verläuft, so daß das Verhältnis der Außendurchmesser der beiden Hohlkörper völlig unbeachtlich ist. Hierbei kann die Schweißnaht im Bereich der Oberfläche der beiden Körper erzeugt werden, sie kann auch auf der Innenseite der beiden Hohlkörper erzeugt werden. Im letzteren Fall ist die Schweißeinrichtung so anzuordnen, daß sie mit dem Schweißkopf in den durchdrungenen Hohlkörper eintaucht.

Gemäß einem zweiten Lösungsprinzip werden erfindungsgemäß beide Hohlkörper unter Bildung eines Werkstückes miteinander verbunden, der durchdrungene Hohlkörper des gebildeten Werkstückes in einer Einrichtung zur Durchführung einer Pendelbewegung eingespannt, auf der der Durchdringungskurve gegenüberliegenden Stirnfläche des durchdringenden Hohlkörpers wird eine Schweißeinrichtung lösbar angeordnet, wobei die Pendelfrequenz der Einrichtung und die Geschwindigkeit des Schweißkopfes der Schweißeinrichtung in Richtung der Durchdringungskurve so gesteuert werden, daß die Schweißnaht in Wannenlage erzeugt wird. Durch diese Maßnahmen wird erreicht, daß beim Verschweißen der beiden Hohlkörper auf ihrer Aussenseite längs der Durchdringungslinie durch die erfindungsgemäße Änderung der räumlichen Lage der Durchdringungskurve die Schweißnaht so erzeugt wird, daß der Schweißvorgang stets in Wannenlage wie bei zwei ebenen, flächigen, horizontal ausgerichteten Werkstücken erfolgt.

Erfindungswesentlich ist bei beiden Lösungsprinzipien, daß die Durchdringungskurve ihre räumliche Lage während des Schweißens vorgebbar ändert.

Pendelfrequenz und Geschwindigkeit des Schweißkopfes müssen bei der Durchführung des erfindungsgemäßen Verfahrens aufeinander abgestimmt werden, damit die Änderung der räumlichen Lage der Durchdringungskurve so erfolgt, daß sie stets unterhalb des Schweißkopfes im wesentlichen horizontale Ebenen durchläuft bzw. die Schweißnaht in Wannenlage erzeugt wird.

In einer weiteren Ausgestaltung der Erfindung werden Pendelfrequenzen und Geschwindigkeit des Schweißkopfes so gesteuert, daß die Schweißnaht mit konstanter Geschwindigkeit erzeugt wird. Es ergibt sich hierdurch eine Schweißnaht von konstantem vorgegebenem Querschnitt, was bei extremen Arbeitsdrücken von besonderer Wichtigkeit ist.

-5-

Gemäß einer bevorzugten Ausführungsform des erfindungsgemäßen
Verfahrens wird bei axialsymmetrischen durchdrungenen Hohlkörpern die Achse dieser Hohlkörper horizontal ausgerichtet,
wobei die Pendelbewegung um die Achse erfolgt. Durch diese
Maßnahmen ergibt sich eine besonders einfache und unkomplizierte Durchführung des erfindungsgemäßen Verfahrens, wobei
sein besonderer Vorzug darin liegt, daß sowohl die Pendelfrequenz als auch die Geschwindigkeit des Schweißkopfes manuell
so aufeinander abgestimmt werden, daß das Bedienungspersonal
rein optisch die Erzeugung einer Schweißnaht mit konstanter
Geschwindigkeit, d.h. konstanter Breite und Höhe ohne weiteres optisch verfolgen kann.

Die Vorrichtung zur Durchführung des Verfahrens ist erfindungsgemäß gekennzeichnet durch eine Einrichtung mit einem Spannfutter für den durchdrungenen Hohlkörper und einer auf den
durchdringenden Hohlkörper aufsetzbaren und mittels Spannbacken mit ihr verbindbaren Schweißeinrichtung. Durch diese
Maßnahmen wird erreicht, daß sowohl die Einrichtung zur Durchführung der Pendelbewegung als auch die Schweißeinrichtung voneinander unabhängige Aggregate sind, so daß die gesamte Vorrichtung einfach zu handhaben ist. Insbesondere ergibt sich
hierdurch ein sehr einfaches Einspannen des aus den beiden
gehefteten Hohlkörpern gebildeten Werkstücks, wobei anschließend auf den durchdringenden Hohlkörper die Schweißeinrichtung mittels der Spannbacken befestigt wird. Insbesondere können hierdurch Werkstücke beliebiger Gestalt bzw. Form
durch das erfindungsgemäße Verfahren miteinander verschweißt
werden, ohne daß Beschränkungen bestehen, wie sie bei einer
Vorrichtung zu beachten wären, bei der die Einrichtung mit
dem Spannfutter und die Schweißeinrichtung lediglich gegeneinander verschwenkbar sind.

Die Erfindung wird anhand von Ausführungsbeispielen in der Zeichnung näher erläutert. Es zeigen:

Fig. 1          ein aus zwei zylindrischen Hohlkörpern bestehendes Werkstück;

Fig. 2 - 4      schematisch die Durchführung des erfindungsgemäßen Verfahrens für das Werkstück nach Fig. 1;

Fig. 5          eine Vorrichtung zur Durchführung des erfindungsgemäßen Verfahrens.

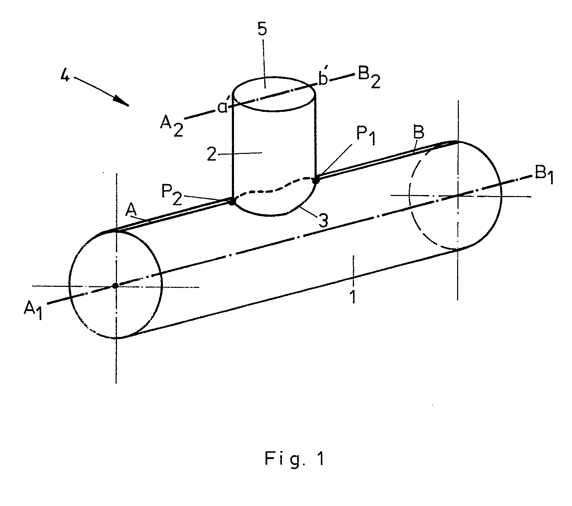

In Fig. 1 ist mit 1 ein Druckbehälter für den Kernreaktorbau bezeichnet. Der Druckbehälter ist der durchdringende Hohlkörper, der mit dem Rohrstutzen 2 als dem durchdringenden Hohlkörper längs der Durchdringungslinie 3 zu verschweißen ist. Beide Hohlkörper sind bereits zu dem Werkstück 4 geheftet.

Das Schweißverfahren wird so durchgeführt, daß der Behälter 1 eine Pendelbewegung um seine horizontal ausgerichtete Symmetrieachse $\overline{A_1B_1}$ durchführt. Der Rohrstutzen hat einen konstanten Außendurchmesser. Sein Durchmesser in Richtung der Symmetrieachse $\overline{A_1B_1}$ ist mit $\overline{A_2B_2}$ bezeichnet. Weiterhin ist in Richtung der Symmetrieachse $\overline{A_1B_1}$ auf der Behälteraußenwand die Mantellinie $\overline{A_1B_1}$ eingezeichnet, die mit der Projektion des Durchmessers $\overline{A_2B_2}$ auf die Mantelfläche des Behälters übereinstimmt. Auf der der Durchdringungskurve 3 gegenüberliegenden Stirnfläche 5 des Rohrstutzens ist eine nicht dargestellte Schweißeinrichtung lösbar befestigt, die um die nicht eingezeichnete Mittellinie des Stutzens eine Rotationsbewegung durchführt und den ebenfalls nicht dargestellten Schweißbrenner bezogen auf die Mittellinie des Stutzens auf einer Kreisbahn führt. Gleichzeitig führt der Schweißkopf in Abhängigkeit

-7-

von dem Drehwinkel der Rotationsbewegung eine Bewegung parallel zur Achsenrichtung des Rohrstutzens aus, so daß er längs der Durchdringungslinie im vorgegebenen Abstand geführt wird.

Der Behälter ist in ein nicht dargestelltes Spannfutter eingespannt und führt um seine horizontal ausgerichtete Achse $\overline{A_1 B_1}$ eine Pendelbewegung durch. Die Ausgangslage ist hierbei so gewählt, daß sie mit der Mantellinie $\overline{A_1 B_1}$ übereinstimmt, d.h., daß der Schweißvorgang im Bereich der einen Schnittlinie $P_1$ der Durchdringungskurve 3 mit der Mantellinie $\overline{A_1 B_1}$ über den zweiten Schnittpunkt $P_2$ zurück zu dem ersten $P_1$ erfolgt. Hierbei führt der Behälter die Pendelbewegung durch. In der gezeigten Stellung erfolgt sie aus der Ausgangslage $P_1$, die als Nullage zu bezeichnen ist, um einen vorbestimmten Winkel entgegen dem Uhrzeigersinn bis zum Erreichen des zweiten Schnittpunktes $B_2$ und erfolgt dann entgegen dem Uhrzeigersinn in die Lage $P_1$ zurück. Gleichzeitig führt die Schweißbewegung eine Rotationsbewegung von 360° aus. Der Schweißkopf führt hierbei in Bezug auf den Rohrstutzen eine zusammengesetzte Bewegung aus: einmal längs der Kreisbahn infolge der Rotation der Schweißeinrichtung und zweitens eine Bewegung in Richtung der Achse des Stutzens längs der Mantellinie. Pendelbewegung sowie Rotationsbewegung und Bewegung des Schweißkopfes längs der Mantellinie sind hierbei so aufeinander abgestimmt, daß der momentane Bereich der Durchdringungskurve unterhalb des Schweißkopfes in einer horizontalen Ebene verläuft, d.h. im vorliegenden Fall, die Wannenlage der Schweißstelle eingehalten wird.

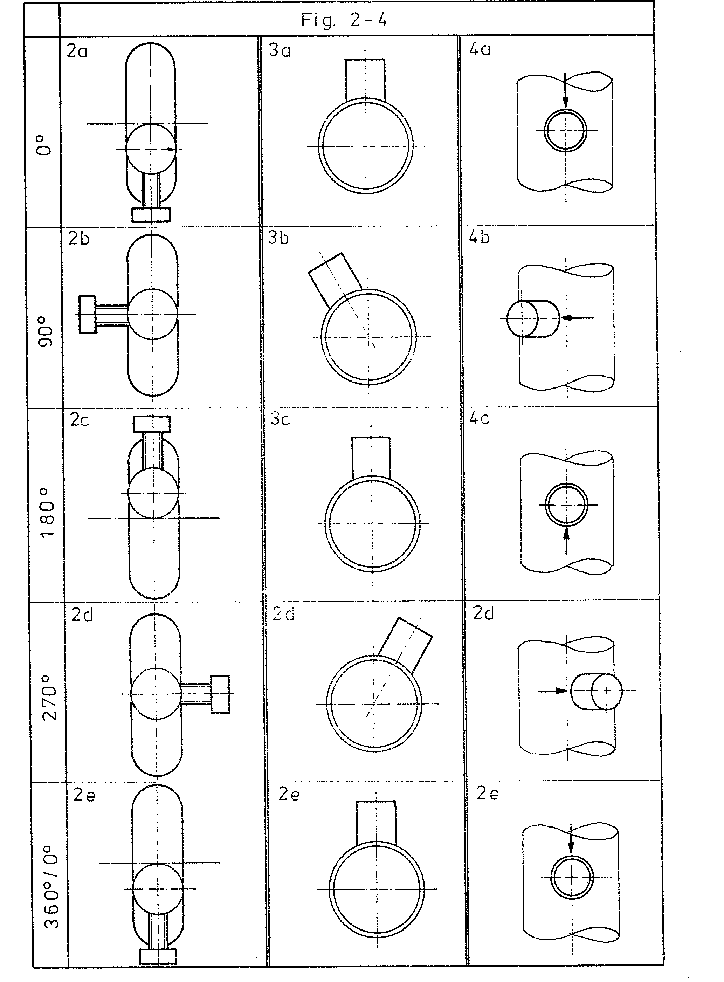

In den Fig. 2a bis 2e ist die Rotationsbewegung der Schweißeinrichtung in Abhängigkeit vom Winkel dargestellt, wobei die Lage 0° und 360° dem Punkt $P_1$ entsprechen. Gleichzeitig

-8-

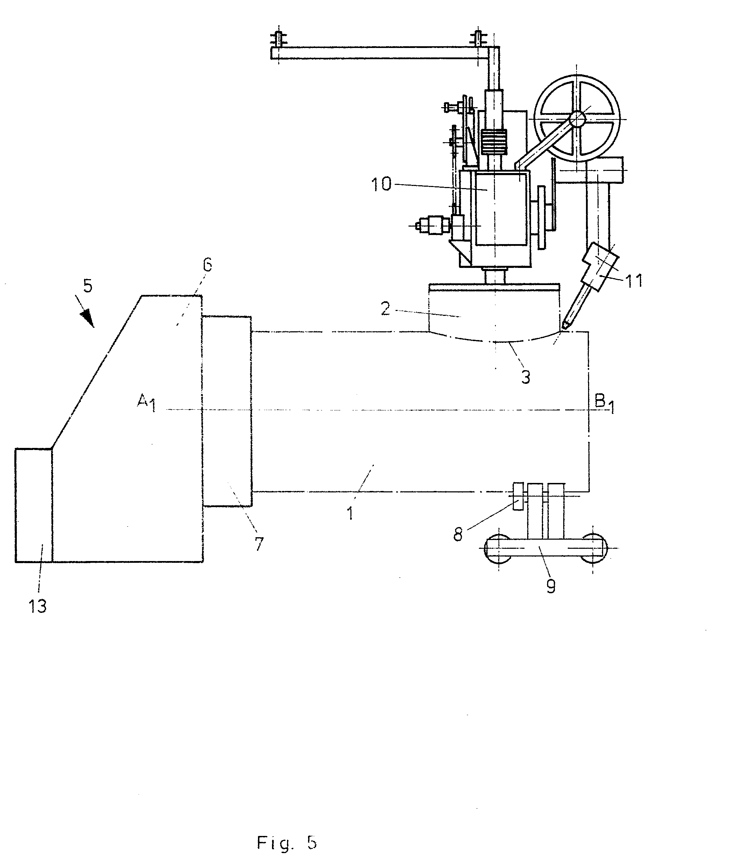

führt der Rohrstutzen bei Blickrichtung in Richtung der Mittellinie $\overline{A_1B_1}$ die in den Fig. 3a bis 3e dargestellte Pendelbewegung durch. In Fig. 4a bis 4e ist in Draufsicht diese Bewegung des Rohrstutzens und durch den Pfeil die Stellung des Schweißkopfes dargestellt.

Fig. 5 zeigt schematisch ein Ausführungsbeispiel der erfindungsgemäßen Schweißvorrichtung. Mit 1, 2 bzw. 3 sind der Behälter, der Rohrstutzen bzw. die Durchdringungslinie bezeichnet. Der Behälter ist im Bereich der von dem Rohrstutzen abgewandten stirnseitigen Endabschnitte in die Einrichtung 5 zur Durchführung der Pendelbewegung längs seiner horizontal ausgerichteten Mittellinie $\overline{A_1B_1}$ (Fig. 1) eingespannt. Die Einrichtung besteht aus einem ortsfesten Maschinengestell 6, in dem das Spannfutter 7 für den Behälter 1 verdrehbar zur Durchführung der Pendelbewegung gelagert ist. Zur erleichterten Durchführung dieser Pendelbewegung ist der Behälter an dem von dem Rohrfutter abgewandten Ende auf den Rollen 8 eines Rollenwagens 9 drehbar gelagert.

Auf dem Rohrstutzen 2, d.h. auf der der Durchdringungslinie 3 gegenüberliegenden Stirnseite des Rohrstutzens ist die Schweißeinrichtung 10 derart mittels nicht dargestellter Spannbacken lösbar befestigt, daß sie eine Rotationsbewegung durchführen kann. Ihre Rotationsachse fällt in dem dargestellten Ausführungsbeispiel mit der Mittellinie des Rohrstutzens zusammen. Die Schweißeinrichtung weist einen Schweißkopf 11 auf, der über ein Gestänge eine Bewegung parallel zur Mittellinie des Stutzens ausführen kann und zwar derart, daß der Abstand von dieser Achse konstant bleibt. Durch diese Maßnahme wird erreicht, daß sich der Schweißkopf längs der Durchdringungskurve bewegt. Die Stromzuführungen und die Zuführung des Schweißdrahtes sind nicht dargestellt.

Weiterhin ist ein Steuerpult 13 vorhanden, das es einerseits erlaubt, über eine Nachlaufsteuerung von Hand die Pendelbewegung, die Rotationsbewegung und die Bewegung des Schweißkopfes in axialer Richtung des Rohrstutzens so zu steuern, daß die Schweißnaht stets in Wannenlage erzeugt wird.

Es ist ohne weiteres möglich, mittels optoelektronischer Steuerscheiben u.dgl., die an sich bekannt sind, aufgrund der gegebenen Geometrie die Steuerscheiben so zu kodieren, daß ein vollautomatischer Betrieb durchführbar ist.

-10-

Patentansprüche:

1. Verfahren zum Verschweißen von zwei längs ihrer räumlichen Durchdringungskurve miteinander zu verschweißenden Hohlkörpern,
d a d u r c h   g e k e n n z.e i c h n e t,
daß beide Hohlkörper unter Bildung eines Werkstückes miteinander verbunden werden, der durchdrungene Hohlkörper des gebildeten Werkstückes in einer Einrichtung zur Durchführung einer Pendelbewegung eingespannt wird, auf der der Durchdringungskurve gegenüberliegenden Stirnseite des durchdringenden Hohlkörpers eine Schweißeinrichtung lösbar angeordnet wird, die Pendelfrequenz der Einrichtung und die Geschwindigkeit des Schweißkopfes der Schweißeinrichtung in Richtung der Durchdringungskurve so gesteuert werden, daß während des Schweißens die Durchdringungskurve unterhalb des Schweißkopfes im wesentlichen horizontale Ebenen durchläuft.

2. Verfahren zum Verschweißen von zwei längs ihrer räumlichen Durchdringungskurve miteinander zu verschweißenden Hohlkörpern,
d a d u r c h   g e k e n n z e i c h n e t,
daß beide Hohlkörper unter Bildung eines Werkstückes miteinander verbunden werden, der durchdrungene Hohlkörper des gebildeten Werkstückes in einer Einrichtung zur Durchführung einer Pendelbewegung eingespannt wird, auf der der Durchdringungskurve gegenüberliegenden Stirnseite des durchdringenden Hohlkörpers eine Schweißeinrichtung lösbar angeordnet wird, die Pendelfrequenz der Einrichtung und die Geschwindigkeit des Schweißkopfes der Schweißeinrichtung in Richtung der Durchdringungskurve so gesteuert werden, daß die Schweißnaht in Wannenlage erzeugt wird.

3. Verfahren nach Anspruch 1 oder 2,
   d a d u r c h   g e k e n n z e i c h n e t,
   daß die Pendelfrequenz und die Geschwindigkeit des Schweißkopfes so gesteuert werden, daß die Schweißnaht mit konstanter Geschwindigkeit erzeugt wird.

4. Verfahren nach Anspruch 1, 2 oder 3,
   d a d u r c h   g e k e n n z e i c h n e t,
   daß bei axialsymmetrischen durchdrungenen Hohlkörpern die Achse dieser Hohlkörper horizontal ausgerichtet wird und die Pendelbewegung um diese Achse erfolgt.

5. Vorrichtung zur Durchführung des Verfahrens nach einem der Ansprüche 1 bis 3,
   g e k e n n z e i c h n e t   d u r c h
   eine Einrichtung (5) mit einem Spannfutter (7) für den durchdrungenen Hohlkörper (1) und eine auf den durchdringenden (2) Hohlkörper aufsetzbare und mittels Spannbacken mit ihm verbindbare Schweißeinrichtung (10).

0060382

1/3

Fig. 1

0060382

| | Fig. 2-4 | | |
|---|---|---|---|
| 0° | 2a | 3a | 4a |
| 90° | 2b | 3b | 4b |
| 180° | 2c | 3c | 4c |
| 270° | 2d | 2d | 2d |
| 360°/0° | 2e | 2e | 2e |

0060382

Fig. 5

Europäisches
Patentamt

**EUROPÄISCHER RECHERCHENBERICHT**

Nummer der Anmeldung

EP  82 10 0500

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,E P | DE-A-3 005 153 (MANNESMANN)(Veroffentlichungstag : 13-08-1981)(Anmeldungstag: 08-02-1980) | 1-5 | B 23 K    9/02 |
| X,Y | DE-A-2 254 147   (MULLER) * Seiten 6,7 * | 1-5 | |
| Y | CH-A-  397 904   (DE LAVAL TURBINE) * Seite 1, Zeilen 28-59 * | 1,2,4, 5 | |
| A | DE-A-2 442 725   (SHIN MEIWA) | 1-5 | |
| A | CH-A-  343 041   (L'AIR LIQUIDE) * Seite 1, Zeilen 49-50 * | 3 | |

RECHERCHIERTE
SACHGEBIETE (Int. Cl. ³)

B 23 K    9/00

Der vorliegende Recherchenbericht wurde für alle Patentansprüche erstellt.

| Recherchenort DEN HAAG | Abschlußdatum der Recherche 24-06-1982 | Prüfer HOORNAERT W. |
|---|---|---|